# EUROPÄISCHE PATENTSCHRIFT

(11) **EP 2 186 680 B1**
(45) Veröffentlichungstag und Bekanntmachung des Hinweises auf die Patenterteilung: **10.02.2016**
(21) Anmeldenummer: 09175531.4
(22) Anmeldetag: 10.11.2009
(51) Int. Cl.: B60Q 1/26, B60Q 1/32, B60Q 1/34, H01L 21/68, H05K 1/02

(54) **Leuchte für Fahrzeuge**
Light for vehicles
Lampe pour véhicules

(30) Priorität: 14.11.2008 DE 102008057322
(43) Veröffentlichungstag der Anmeldung: 19.05.2010
(73) Patentinhaber: Hella KGaA Hueck & Co., 59552 Lippstadt (DE)
(72) Erfinder: Brune, Joachim, 59519, Möhnesee (DE); Brandherm, Rolf, 33449, Langenberg (DE); Aue, Ferdinand, 33189, Schlangen (DE)

(56) Entgegenhaltungen:
- EP-A1- 1 275 557
- EP-A2- 0 150 637
- EP-A2- 1 637 796
- DE-U1- 20 304 930
- FR-A1- 2 876 965
- GB-A- 615 527
- GB-A- 792 003
- JP-A- 8 268 152
- JP-A- 10 065 288
- JP-U- 5 045 811
- US-A- 3 454 757

## Beschreibung

Die Erfindung betrifft eine Leuchte für Fahrzeuge, nach dem Oberbegriff des Patentanspruchs 1.

Aus der DE 102 43 491 A1 ist eine Leuchte für Fahrzeuge bekannt mit einem Gehäuse, in dem zum einen eine erste Leuchtenkammer zur Erzeugung einer ersten Lichtfunktion und eine zweite Leuchtenkammer zur Erzeugung einer zweiten Lichtfunktion angeordnet sind. Die erste Leuchtenkammer und die zweite Leuchtenkammer sind durch eine lichtundurchlässige Trennwand voneinander getrennt. In Lichtabstrahlrichtung sind die beiden Leuchtenkammern von einer lichtdurchlässigen Abschlussscheibe begrenzt. Die erste Leuchtenkammer weist zur Erzeugung einer Seitenblinklichtfunktion ein erstes Leuchtelement auf, das mit einer gelborangen Lichtfarbe abstrahlt. Die zweite Leuchtenkammer weist zur Erzeugung einer Vorfeldbeleuchtungsfunktion ein zweites Leuchtelement auf, das Licht in einer weißen Lichtfarbe abstrahlt. Die Trennwand verläuft im Wesentlichen horizontal, wobei ein in Fahrtrichtung vorderer Abschnitt der Trennwand bogenförmig nach unten hin abknickt. Aufgrund des Leuchtenaufbaus kann bei der Montage der Leuchtelemente in den Leuchtenkammern ein unerwünschtes Verwechseln desselben vermieden werden. Das eine weiße Lichtfarbe abgebende zweite Leuchtelement wird stets in der unteren zweiten Leuchtenkammer montiert. Bei einer anders ausgeführten Kombinationsleuchte, beispielsweise bei einer Umrissleuchte, die eine vertikal verlaufende Trennwand und symmetrisch zueinander verlaufende erste Leuchtekammer und zweite Leuchtenkammer aufweist, besteht das Problem bei der Montage darin, den Leuchtenkammern die korrekten Leuchtelemente zuzuordnen bzw. die Leuchte in der korrekten Ausrichtung an der Karosserie des Fahrzeugs zu befestigen. Insbesondere wenn das erste Leuchtelement und das zweite Leuchtelement an gegenüberliegenden Flachseiten der Trennwand positioniert werden müssen, kann eine Fehlzuordnung eintreten.

Aus der JP 10 065288 A ist eine Farbmarkierung auf einer Leiterplatte offenbart, um die Leiterplatte mit entsprechend kodierten elektronischen Bauteilen, wie Widerstände etc. in korrekter Weise zu bestücken.

Aus der JP 05 045811 U ist eine Leuchte für Fahrzeuge mit einem Gehäuse bekannt. In dem Gehäuse sind zwei Leuchtenkammern vorgesehen, denen jeweils unterschiedliche Lichtfarbe abstrahlende Leuchtelemente zugeordnet sind. Die beiden Leuchtelemente sind auf gegenüberliegenden Seiten einer lichtundurchlässigen Trennwand angeordnet, die als eine Leiterplatte ausgebildet ist. Das von den Leuchtelementen abgestrahlte Licht wird über Reflektoren umgelenkt in Richtung einer mit Streumitteln versehenen Abschlussscheibe. An einer Außenseite der Reflektoren ist ein elektrischer Anschluss für die Leuchtelemente vorgesehen.

Die US 3 454 757 A und die DE 203 04 930 U1 offenbaren eine Leuchte mit zwei Bodenplatten, die jedoch flächig aneinander liegen, so dass kein Raum zur Aufnahme von elektrischen Bauteilen gegeben ist.

Ferner offenbaren die GB 792 003 A und die EP 1 637 796 A2 keine Leuchte mit einem doppelten Boden, der Raum bietet zur Aufnahme von elektrischen Bauteilen. Aufgabe der vorliegenden Erfindung ist es daher, eine Leuchte für Fahrzeuge derart weiterzubilden, dass die Zuordnung von Leuchtelementen zu Leuchtenkammern der Leuchte bzw. die Montage der Leuchte am Fahrzeug vereinfacht wird, wobei insbesondere eine verbesserte Dichtigkeit der Leuchte im montierten Zustand gewährleistet ist.

Zur Lösung dieser Aufgabe weist die Erfindung die Merkmale des Patentanspruchs 1 auf.

Der besondere Vorteil der Erfindung besteht darin, dass mindestens eine Flachseite einer das erste Leuchtelement und das zweite Leuchtelement aufnehmenden Trennwand mit einer Markierung versehen ist, so dass eine eindeutige Zuordnung der Leuchtelemente zu der entsprechenden Flachseite der Trennwand erreicht wird. Die erfindungsgemäße Markierung dient somit als Erkennungsmerkmal für die korrekte Zuordnung der Leuchtelemente hinsichtlich ihrer Lichtfunktion, was insbesondere die Montage bei gleich ausgebildeten Leuchteelemente und Leuchtenkammern vereinfacht. Der unerwünschte Betrieb einer Lichtfunktion mit einer falschen Lichtfarbe kann somit sicher vermieden werden. Nach der Erfindung ist die Markierung als eine Farbmarkierung ausgebildet, die die gleiche Farbe aufweist wie die Lichtfarbe des an die mit der Farbmarkierung versehene Flachseite anzubringenden Leuchtelementes. Vorteilhaft wird hierdurch eine einfache farbliche Verknüpfung zwischen der Flachseite der Trennwand und dem Leuchtelement geschaffen, so dass eine fehlerhafte Montage der Leuchtelemente bzw. der Leuchte am Kraftfahrzeug ausgeschlossen ist.

Nach einer Weiterbildung der Erfindung ist die erste Flachseite und/oder die zweite Flachseite der Trennwand teilweise oder vollständig mit der zu der Lichtfarbe des auf derselben Flachseite anzuordnenden Leuchtelementes korrespondierenden Farbe als Farbmarkierung versehen, so dass eine eindeutige Zuordnung des Leuchtelementes zu der entsprechenden Flachseite gegeben ist. Die Farbmarkierung kann beispielsweise im Randbereich der Trennwand oder im Bereich einer Aufnahmeöffnung der Trennwand für das Leuchtelement angeordnet sein. Vorzugsweise ist die Farbmarkierung als eine Bedruckungsfläche ausgebildet, die relativ einfach auf die Trennwand aufbringbar ist.

Nach einer Weiterbildung der Erfindung ist eine Abschlussscheibe einteilig und einfarbig ausgebildet. Vorteilhaft kann somit für mindestens zwei Lichtfunktionen unterschiedlicher Lichtfarbe eine einheitliche Abschlussscheibe verwendet werden. Die Lichtfarbe der entsprechenden Lichtfunktionen ist durch die Lichtfarbe der entsprechenden Leuchtelemente und der diese umgebenden Farbmarkierung vorgegeben. Vorteilhaft kann hierdurch der Herstellungsaufwand wesentlich verringert werden.

Nach einer Weiterbildung der Erfindung ist die Trennwand als eine Trägerplatte bzw. Leiterplatte mit vorzugsweise Leiterbahnen ausgebildet. Die Leuchtelemente sind als LED-Leuchtelemente ausgebildet, so dass die Leuchte einen Platz sparenden Aufbau aufweist.

Nach einer Weiterbildung der Erfindung verläuft die Leiterplatte in einer vertikalen Richtung, wobei in der ersten Leuchtenkammer das erste Leuchtelement zur Bildung einer Positionslichtfunktion eine weiße Lichtfarbe und in der zweiten Leuchtenkammer ein zweites Leuchtelement zur Bildung einer Schlusslichtfunktion eine rote Lichtfarbe abstrahlt. Diese Kombinationsleuchte kann somit als eine Umrissleuchte ausgebildet sein, die vorzugsweise an Lastkraftwagen montierbar ist.

Nach einer Weiterbildung der Erfindung kann sich die Trägerplatte in horizontaler Richtung erstrecken, wobei in der ersten Leuchtenkammer ein erstes Leuchtelement angeordnet ist, das zur Erzeugung einer Blinklichtfunktion eine gelbe Lichtfarbe bzw. gelborange Lichtfarbe abstrahlt. In einer zweiten Leuchtenkammer ist ein zweites Leuchtelement angeordnet, das zur Positionslichtfunktion eine weiße Lichtfarbe abstrahlt. Diese Kombinationsleuchte kann beispielsweise im Heck- oder Bugbereich des Kraftfahrzeugs angeordnet sein.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine perspektivische Vorderansicht einer Kombinationsleuchte,
- Fig. 2: einen Querschnitt durch die Kombinationsleuchte und
- Fig. 3: einen mittleren Längsschnitt durch die Kombinationsleuchte.

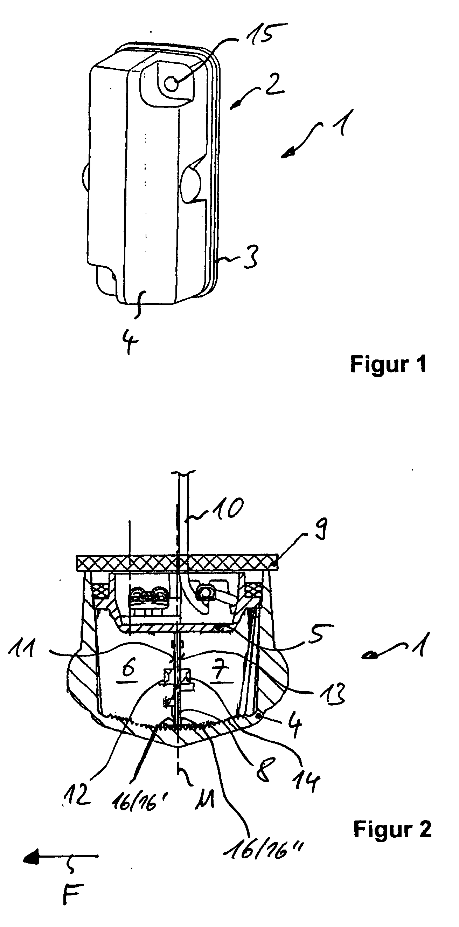

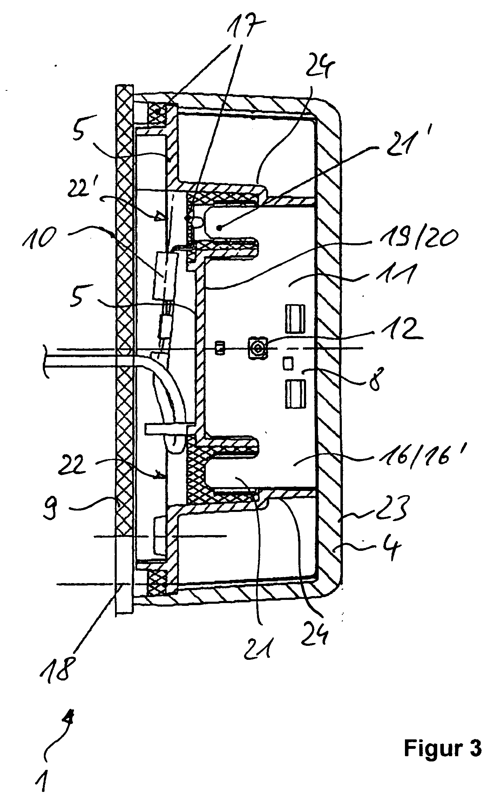

Eine Leuchte für Fahrzeuge kann beispielsweise als eine Umrissleuchte 1 gemäß den Figuren 1 bis 3 ausgebildet sein, die an einer Seite eines Lastkraftwagens montierbar ist. Die erfindungsgemäße Leuchte ist insbesondere als eine Kombinationsleuchte ausgebildet, in der im Nichtbetriebszustand gleich ausgebildete Leuchtelemente für unterschiedliche Lichtfunktionen eingesetzt werden.

Die Umrissleuchte 1 ist im Wesentlichen quaderförmig ausgebildet und weist ein Gehäuse 2 auf, das einen plattenförmigen Boden 3 und einer fest mit demselben verbundene, lichtdurchlässige kappenförmige Abschlussscheibe 4 aufweist. Die Abschlussscheibe 4 ist transparent, beispielsweise glasklar, ausgebildet. Der Boden 3 ist doppelbödig ausgebildet und weist auf einer der Abschlussscheibe 4 zugewandten Seite eine erste Basisplatte 5 auf, die zusammen mit der Abschlussscheibe 4 eine erste Leuchtenkammer 6 und eine zweite Leuchtenkammer 7 umgibt. Ferner weist der Boden 3 auf einer einem nicht dargestellten Karosserieteil des Lastkraftwagens zugewandten Seite eine zweite Basisplatte 9 auf, die in einem mittleren Bereich eine Öffnung für den Durchtritt für eine elektrischen Zuleitung 10 aufweist. Die zweite Basisplatte 9 ist als eine flexible Dichtplatte ausgebildet. Die erste Leuchtenkammer 6 und die zweite Leuchtenkammer 7 sind mittels einer lichtundurchlässigen Trennwand 8 voneinander getrennt. Die Trennwand 8 erstreckt sich in einer Längsmittelebene M der Leuchte, so dass zwei gleichgroße Leuchtenkammern 6 und 7 gebildet sind.

Die Trennwand 8 ist als eine Leiterplatte mit vorzugsweise Leiterbahnen ausgebildet, die auf einer ersten Flachseite 11 zumindest mit mindestens einem Leuchtelement 12 und gegebenenfalls weiteren elektronischen Bauteilen einerseits und auf einer zweiten Flachseite 13 mit mindestens einem zweiten Leuchtelement 14 und gegebenenfalls weiteren elektronischen Bauteilen bestückt ist. Das erste Leuchtelement 12 und das zweite Leuchtelement 14 sind jeweils als LED-Leuchtelemente (Leuchtdioden) ausgebildet, die die gleiche Formgebung bzw. Dimension aufweisen. Das erste Leuchtelement 12 ist derart ausgebildet, dass es Licht in einer weißen Lichtfarbe abstrahlt zur Erzeugung einer Positionslichtfunktion in Fahrtrichtung F des Fahrzeugs. Das zweite Leuchtelement 14 ist derart ausgebildet, dass es im Betriebszustand eine rote Lichtfarbe abstrahlt zur Bildung einer Schlusslichtfunktion entgegen der Fahrtrichtung F.

Im Montagezustand der Umrissleuchte 1 ist dieselbe unter Anlage der Dichtungsplatte 9 an dem Karosserieteil des Lastkraftwagens mittels durch Verschraubung mit dem Karosserieteil des Lastkraftwagens verbunden. Zu diesem Zweck weist die Abschlussscheibe 4 an diagonal gegenüberliegenden Eckbereichen eine Bohrung 15 bzw. der Boden 3 eine korrespondierende Bohrung auf. Im Montagezustand der Umrissleuchte 1 erstreckt sich die Leiterplatte 8 in einer vertikalen Ebene quer zur Fahrzeuglängsachse, so dass im Betriebszustand der Umrissleuchte 1 Licht mit weißer Lichtfarbe in Fahrzeugrichtung F nach vorne und Licht mit roter Lichtfarbe entgegen der Fahrzeugrichtung F abgestrahlt wird.

Damit die Umrissleuchte 1 lagerichtig montiert wird, ist die erste Flachseite 11 und/oder die zweite Flachseite 13 mit einer Markierung 16, insbesondere Farbmarkierung, versehen. Im vorliegenden Ausführungsbeispiel ist die Farbmarkierung 16 durch Bedruckung aufgebracht, wobei eine Oberfläche der ersten Flachseite 11 mit einer weißen Bedruckung 16' und eine Oberfläche der zweiten Flachseite 13 mit einer roten Bedruckung 16" versehen ist. Die erste Flachseite 11 und die zweite Flachseite 13 sind jeweils vollflächig mit der Farbbedruckung 16' bzw. 16" versehen, so dass bei der Montage des ersten Leuchtelementes 12 und zweiten Leuchtelementes 14 eine eindeutige Zuordnung derselben zu der ersten Flachseite 11 bzw. zweiten Flachseite 13 einerseits und dass bei der Montage der Leuchte 1 an dem Lastkraftwagen eine eindeutige Ausrichtung der ersten Leuchtenkammer 6 und der zweiten Leuchtenkammer 7 andererseits gegeben ist. Aufgrund der gleich ausgebildeten ersten Leuchtenkammer 6 und der zweiten Leuchtenkammer 7 wird somit eine korrekte Zuordnung der ersten Flachseite 11 und der zweiten Flachseite 13 zu den entsprechenden Leuchtenkammern 6, 7 gewährleistet.

Im vorliegenden Ausführungsbeispiel weisen die Farbmarkierungen 16', 16" die gleiche oder ähnliche Farbe auf, wie die Lichtfarbe des ersten Leuchtelementes 12 bzw. zweiten Leuchtelementes 14, das an die entsprechende erste Flachseite 11 bzw. zweite Flachseite 13 der Leiterplatte 8 anzubringen ist.

Nach einer alternativen Ausführungsform können die erste Flachseite 11 und/oder die zweite Flachseite 13 auch nur teilweise mit der Farbbedruckung 16', 16" versehen sein. Beispielsweise kann die Farbmarkierung 16', 16" im Bereich der Leuchtelementeaufnahme der Leiterplatte 8 und/oder an einem Rand der Leiterplatte 8 angeordnet sein.

Nach einer nicht dargestellten alternativen Ausführungsform kann die Markierung auch als ein die Funktion der jeweiligen Leuchtenkammer 6, 7 kennzeichnendes Symbol (Schriftsymbol) ausgebildet sein.

Die die erste Leuchtenkammer 6 und die zweite Leuchtenkammer 7 abdeckende Abschlussscheibe 4 ist einstückig/einteilig und einfarbig ausgebildet. Die Abschlussscheibe 4 ist über Dichtmittel 17 fest mit der ersten Basisplatte 5 bzw. Dichtungsplatte 9 verbunden. Die Dichtungsplatte 9 weist randseitig eine Belüftungsöffnung 18 zum Hinterlüften der Leuchte 1 auf.

Die Leiterplatte 8 ist an einem mittleren Abschnitt 19 eines Randes 20 desselben fest mit der ersten Basisplatte 5 verbunden. Zur Montage der Leiterplatte 8 an der starren ersten Basisplatte 5 weist dieselbe einen Schlitz auf, in der der mittlere Abschnitt 19 der Leiterplatte 8 einrastet und dann mit derselben fest verbunden wird. Die Leiterplatte 8 erstreckt sich in der Montageposition senkrecht zur ersten Basisplatte 5. Zu beiden Seiten des mittleren Abschnittes 19 erstreckt sich ein äußerer Abschnitt des Randes 20 der Leiterplatte 8, der als ein Kontaktelement 21, 21' ausgebildet ist. Die Kontaktelemente 21, 21' sind jeweils mit einer Kontakthülse 22, 22' (Flachsteckhülse) der elektrischen Zuleitung 10 durch Aufstecken verbindbar. Der Raum zwischen der ersten Basisplatte 5 und der zweiten Basisplatte 9 dient zur Aufnahme eines Teils der elektrischen Zuleitung 10. Die erste Basisplatte 5 weist im Bereich der Längsmittelebene M in Richtung einer Deckseite 23 der Abschlussscheibe 4 weisende Aufnahmeausleger 24 auf, in denen die Kontaktelemente 21, 21' der Leiterplatte 8 dichtend gelagert sind. Im vorliegenden Ausführungsbeispiel werden die Kontaktelemente 21, 21' in den entsprechenden Aufnahmeauslegern 24 dicht vergossen. Die Aufnahmeausleger 24 reichen bis hin zu der Deckseite 23 der Abschlussscheibe 4 und ermöglichen somit eine lagerichtige Positionierung der Leiterplatte 8 bei der Montage derselben.

Nach einer nicht dargestellten Ausführungsform der Erfindung kann eine Kombinationsleuchte vorgesehen sein, die vorzugsweise eine gleich ausgebildete erste Leuchtenkammer und eine zweite Leuchtenkammer aufweisen, wobei im Montagezustand der Kombinationsleuchte die die beiden Leuchtenkammern trennende Trennwand in horizontaler Richtung verläuft. Es wird somit eine obere Leuchtenkammer gebildet, der beispielsweise ein Leuchtelement zugeordnet sein kann, das eine gelborange Lichtfarbe zur Erzeugung einer Blinklichtfunktion abstrahlt. Einer unteren Leuchtenkammer kann beispielsweise ein Leuchtelement zugeordnet sein, das Licht mit einer weißen Lichtfarbe zur Bildung eines Positionslichtes abstrahlt.

Nach einer weiteren nicht dargestellten Ausführungsform kann die die zu beiden Seiten aufnehmende Trennwand auch geneigt ausgebildet sein.

### Bezugszeichenliste

- 1: Umrissleuchte
- 2: Gehäuse
- 3: Boden
- 4: Abschlussscheibe
- 5: erste Basisplatte
- 6: erste Leuchtenkammer
- 7: zweite Leuchtekammer
- 8: Trennwand
- 9: zweite Basisplatte
- 10: elektrische Zuleitung
- 11: erste Flachseite
- 12: erstes Leuchtelement
- 13: zweite Flachseite
- 14: zweites Leuchtelement
- 15: Bohrung
- 16, 16', 16": Markierung
- 17: Dichtmittel
- 18: Belüftungsöffnung
- 19: mittlerer Abschnitt
- 20: Rand
- 21, 21': Kontaktelement
- 22, 22': Kontakthülse
- 23: Deckseite (4)
- 24: Aufnahmeausleger
- F: Fahrtrichtung
- M: Längsmittelebene

## Patentansprüche

1. Leuchte für Fahrzeuge, insbesondere Umrissleuchte, mit einem Gehäuse (2), in dem eine erste Leuchtenkammer (6) zur Erzeugung einer ersten Lichtfunktion und eine zweite Leuchtenkammer (7) zur Erzeugung einer zweiten Lichtfunktion angeordnet sind, wobei in der ersten Leuchtenkammer (6) ein erstes Leuchtelement (12) zur Abstrahlung von Licht einer ersten Lichtfarbe und in der zweiten Leuchtenkammer (7) ein zweites Leuchtelement (14) zur Abstrahlung von Licht einer zweiten Lichtfarbe angeordnet sind, dass die erste Leuchtenkammer (6) von der zweiten Leuchtenkammer (7) durch eine lichtundurchlässige Trennwand (8) getrennt ist, dass die erste Leuchtenkammer (6) und die zweite Leuchtenkammer (7) von einer transparenten Abschlussscheibe (4) begrenzt sind, dass das erste Leuchtelement (12) auf einer ersten Flachseite (11) der Trennwand (8) und das zweite Leuchtelement (14) auf einer zweiten Flachseite (13) der Trennwand (8) angeordnet sind, wobei die Trennwand (8) als Leiterplatte ausgebildet ist,
**dadurch gekennzeichnet, dass** die erste Flachseite (11) und/oder die zweite Flachseite (13) der Trennwand (8) mit einer Farbmarkierung (16, 16', 16") versehen ist, wobei die Farbmarkierung (16, 16', 16") die gleiche Farbe aufweist wie die Lichtfarbe des an die mit der entsprechenden Farbmarkierung (16, 16', 16") versehenen Flachseite (11, 13) anzubringenden Leuchtelements (12, 14), so dass die Zuordnung des ersten Leuchtelementes (12) und des zweiten Leuchtelementes (14) zu der ersten Flachseite (11) bzw. zweiten Flachseite (13) und/oder die Zuordnung der ersten Flachseite (11) und der zweiten Flachseite (13) zu der ersten Leuchtenkammer (6) bzw. zweiten Leuchtenkammer (7) sichtbar ist, und dass ein Boden (3) des Gehäuses (2) auf einer der Abschlussscheibe (4) zugewandten Seite eine erste Basisplatte (5) und auf einer einem Fahrzeug zugewandten Seite eine zweite Basisplatte (9) aufweist, die als eine flexible Dichtplatte ausgebildet ist, dass ein mittlerer Abschnitt (19) des Randes (20) der Leiterplatte (8) mit der ersten Basisplatte (5) verbunden ist, dass ein äußerer Abschnitt des Randes (20) der Leiterplatte (8) als ein Kontaktelement (21, 21') ausgebildet ist, das mit einer korrespondierenden Kontakthülse (22, 22') einer elektrischen Zuleitung (10) verbindbar ist, und dass ein zwischen der ersten Basisplatte (5) und der zweiten Basisplatte (9) gebildeter Raum zur Aufnahme eines Teils der elektrischen Zuleitung (10) dient.

2. Leuchte nach Anspruch 1, **dadurch gekennzeichnet, dass** die erste Flachseite (11) und/oder die zweite Flachseite (13) der Trennwand (8) teilweise oder vollständig mit der zu der Lichtfarbe des auf derselben Flachseite (11, 13) angeordneten Leuchtelementes (12, 14) korrespondierende Farbe als Farbmarkierung (16, 16', 16") versehen ist.

3. Leuchte nach Anspruch 1 oder 2, **dadurch gekennzeichnet, dass** die Farbmarkierung (16, 16', 16") als Bedruckung auf der ersten Flachseite (11) und/oder der zweiten Flachseite (13) der Trennwand (8) ausgebildet ist.

4. Leuchte nach einem der Ansprüche 1 bis 3, **dadurch gekennzeichnet, dass** die Trennwand (8) als eine Leiterplatte mit Leiterbahnen ausgebildet ist.

5. Leuchte nach einem der Ansprüche 1 bis 4, **dadurch gekennzeichnet, dass** die erste Leuchtenkammer (6) und die zweite Leuchtenkammer (7) durch eine gemeinsame Abschlussscheibe (4) und einen gemeinsamen Boden (3) begrenzt sind, wobei der Boden (3) auf einer dem Karosserieteil des Fahrzeugs zugewandten Seite der Leuchte (1) angeordnet ist.

6. Leuchte nach einem der Ansprüche 1 bis 5, **dadurch gekennzeichnet, dass** die Abschlussscheibe (4) einfarbig und einteilig ausgebildet ist.

7. Leuchte nach einem der Ansprüche 1 bis 6, **dadurch gekennzeichnet, dass** die Leiterplatte (8) senkrecht zu einer Basisplatte (5) des Bodens (3) verläuft und dass ein Rand (20) der Leiterplatte (8) an der Basisplatte (5) befestigt ist.

8. Leuchte nach einem der Ansprüche 1 bis 7, **dadurch gekennzeichnet, dass** die Leiterplatte (8) in einer vertikalen Ebene angeordnet ist, wobei im Betriebszustand der Leuchte das erste Leuchtelement (12) Licht mit einer weißen Lichtfarbe zur Bildung einer Positionslichtfunktion und das zweite Leuchtelement (14) Licht mit einer roten Lichtfarbe zur Bildung einer Schlusslichtfunktion abstrahlt.

9. Leuchte nach einem der Ansprüche 1 bis 8, **dadurch gekennzeichnet, dass** die Leiterplatte im in einer horizontalen Ebene angeordnet ist, wobei das erste Leuchtelement Licht gelber Lichtfarbe zur Bildung einer Blinklichtfunktion und wobei das zweite Leuchtelement Licht mit einer weißen Lichtfarbe zur Bildung einer Positionslichtfunktion abstrahlt.

## Claims

1. A lamp for vehicles, in particular a clearance lamp with a housing (2), in which a first lamp pocket (6) for the creation of the first light function and a second lamp pocket (7) for the creation of a second light function are arranged, wherein a first light source (12) for the radiation of light in a first light color is arranged in the first lamp pocket (6) and a second light source (14) for the radiation of light in a second light colour is arranged in the second lamp pocket (7), that the first lamp pocket (6) and the second lamp pocket (7) are separated by an opaque separating wall (8), that the first lamp pocket (6) and the second light pocket (7) are limited by a transparent cover lens (4), that the first light source (12) is arranged on a first flat side (11) of the separating wall (8) and that the second light source (14) is arranged on a second flat side (13) of the separating wall (8), the separating wall (8) being embodied as a printed circuit board,
**characterized in that**
the first flat side (11) and/ or the second flat side (13) of the separating wall (8) is provided with a color marking (16, 16', 16"), wherein the color marking (16, 16', 16") has the same color as the as the light color of the light source (12,14) to be attached on the flat side (11,13) marked with the respective color marking (16, 16', 16"), so that the assignment of the first light source (12) and of the second light source (14) to the first flat side (11) respectively the second flat side (13) and/ or the assignment of the first flat side (11) and the second flat side (13) to the first lamp pocket (6) respectively the second lamp pocket (7) is visible, and that a bottom (3) of the housing (2) has a first base plate (5) on a side facing the cover lens (4) and a second base plate (9) on a side facing the vehicle and being embodied as a flexible sealing plate, that a middle section (19) of the edge (20) of the printed circuit board (8) is connected to the first base plate (5), that an outer section of the edge (20) of the printed circuit board (8) is embodied as a contact element (21, 21'), which can be connected with a corresponding contact sleeve (22, 22') of an electric line (10), and that a space formed between the first base plate (5) and the second base plate (9) serves the reception of a part of the electric line (10).

2. Lamp according to Claim 1, **characterized in that** the first flat side (11) and/or the second flat side (13) of the separating wall (8) is partially or completely furnished with a color marking (16, 16', 16") in a color corresponding to the light color of the light source (12, 14) arranged on the same flat side (11, 13).

3. Lamp according to Claim 1 or 2, **characterized in that** the color marking (16, 16', 16") is embodied as a printing on the first flat side (11) and/ or the second flat side (13) of the separating wall (8).

4. Lamp according to one of the Claims 1 to 3, **characterized in that** the separating wall (8) is embodied as a printed circuit board with printed circuit board tracks.

5. Lamp according to one of the Claims 1 to 4, **characterized in that** the first lamp pocket (6) and the second lamp pocket (7) are limited by a common cover lens (4) and a common bottom (3), wherein the bottom (3) is arranged on a side of the lamp (1) facing the body part of the vehicle.

6. Lamp according to one of the Claims 1 to 5, **characterized in that** the cover lens (4) is embodied singlecolored and in one piece.

7. Lamp according to one of the Claims 1 to 6, **characterized in that** the printed circuit board (8) runs vertical relative to a base plate (5) of the bottom (3) and that an edge (20) of the printed circuit board (8) is fastened to the base plate (5).

8. Lamp according to one of the Claims 1 to 7, **characterized in that** the printed circuit board (8) is arranged on a vertical plane, wherein, in the operating mode, the first light source (12) radiates light with a white light color to form a position light function and the second light source (14) radiates light with a red light color to form a tail light function.

9. Lamp according to one of the Claims 1 to 8, **characterized in that** the printed circuit board is arranged in a horizontal plane, wherein the first light source radiates light with an amber light color to form a direction indicator light function and wherein the second light source radiates light with a white light color to form a position light function.

## Revendications

1. Feu pour véhicules, surtout feu d'encombrement, avec un boîtier (2) dans lequel une première chambre de lumière (6) est disposée pour générer une première fonction d'éclairage et une deuxième chambre de lumière (7) pour générer une deuxième fonction d'éclairage, un premier élément lumineux (12) étant disposé dans la première chambre de lumière (6) pour émettre de la lumière d'une première couleur de lumière et un deuxième élément lumineux (14) étant disposé dans la deuxième chambre de lumière (7) pour émettre de la lumière d'une deuxième couleur de lumière, que la première chambre de lumière (6) est séparée de la deuxième chambre de lumière (7) par une cloison opaque (8), que la première chambre de lumière (6) et la deuxième chambre de lumière (7) sont limitées par une glace extérieure transparente (4), que le premier élément lumineux (12) est disposé sur un premier côté plat (11) de la cloison (8) et le deuxième élément lumineux (14) sur un deuxième côté plat (13) de la cloison (8), la cloison (8) étant réalisée en tant que circuit imprimé,
**caractérisé en ce que** le premier côté plat (11) et/ou le deuxième côté plat (13) de la cloison (8) sont munis d'un marquage coloré (16, 16', 16"), le marquage coloré (16, 16', 16") présentant la même couleur que la couleur de lumière de l'élément lumineux (12, 14) à monter sur le côté plat (11, 13) muni du marquage coloré (16, 16', 16") correspondant, de manière que l'affectation du premier élément lumineux (12) et du deuxième élément lumineux (14) au premier côté plat (11) ou au deuxième côté plat (13) et/ou l'affectation du premier côté plat (11) et du deuxième côté plat (13) à la première chambre de lumière (6) ou la deuxième chambre de lumière (7) soit visible et qu'un fond (3) du boîtier (2) présente une première plaque de base (5) sur un côté orienté vers la glace extérieure (4) et une deuxième plaque de base (9) sur un côté orienté vers un véhicule qui est réalisé en tant que plaque d'étanchéité flexible, qu'une section centrale (19) du bord (20) du circuit imprimé (8) est reliée à la première plaque de base (5), qu'une section extérieure du bord (20) du circuit imprimé (8) est réalisée en tant qu'un élément de contact (21, 21') qui peut être raccordé à une douille de contact (22, 22') correspondante d'une ligne électrique (10) et qu'un espace formé entre la première plaque de base (5) et la deuxième plaque de base (9) sert à recevoir une partie de la ligne électrique (10).

2. Feu selon la revendication 1, **caractérisé en ce que** le premier côté plat (11) et/ou le deuxième côté plat (13) de la cloison (8) sont partiellement ou complètement munis en tant que marquage coloré (16, 16', 16") de la couleur correspondante à la couleur de lumière de l'élément lumineux (12, 14) disposé sur le même côté plat (11, 13).

3. Feu selon la revendication 1 ou 2, **caractérisé en ce que** le marquage coloré (16, 16', 16") est réalisé en tant qu'impression sur le premier côté plat (11) et/ou le deuxième côté plat (13) de la cloison (8).

4. Feu selon l'une des revendications 1 à 3, **caractérisé en ce que** la cloison (8) est réalisée en tant qu'un circuit imprimé à pistes conductrices.

5. Feu selon l'une des revendications 1 à 4, **caractérisé en ce que** la première chambre de lumière (6) et la deuxième chambre de lumière (7) sont limitées par une glace extérieure (4) commune et un fond (3) commun, le fond (3) étant disposé sur un côté du feu (1) orienté vers la partie carrosserie du véhicule.

6. Feu selon l'une des revendications 1 à 5, **caractérisé en ce que** la glace extérieure (4) est monochrome et réalisée en une seule pièce.

7. Feu selon l'une des revendications 1 à 6, **caractérise en ce que** le circuit imprimé (8) s'étend perpendiculairement à une plaque de base (5) du fond (3) et qu'un bord (20) du circuit imprimé (8) est fixé sur la plaque de base (5).

8. Feu selon l'une des revendications 1 à 7, **caractérise en ce que** le circuit imprimé (8) est disposé dans un plan vertical, en état de marche du feu le premier élément lumineux (12) émettant de lumière d'une couleur de lumière blanche pour réaliser une fonction de feu de position et le deuxième élément lumineux (14) émettant de lumière d'une couleur de lumière rouge pour réaliser une fonction de feu arrière.

9. Feu selon l'une des revendications 1 à 8, **caractérise en ce que** le circuit imprimé est disposé dans un plan horizontal, le premier élément lumineux émettant de lumière d'une couleur de lumière jaune pour réaliser une fonction de feu clignotant et le deuxième élément lumineux émettant de lumière d'une couleur de lumière blanche pour réaliser une fonction de feu de position.
